# EUROPÄISCHE PATENTANMELDUNG

(11) **EP 4 831 507 A1**
(43) Veröffentlichungstag der Anmeldung: **28.10.2026**
(21) Anmeldenummer: 26172417.3
(22) Anmeldetag: 15.04.2026
(51) Int. Cl.: F16G 5/06, F16G 5/20, F16G 5/22

(54) **VERBUNDRIEMEN AUFWEISEND EINE DECKPLATTE UND RIPPEN UND RIEMENTRIEBE DIESE UMFASSEND**

(30) Priorität: 25.04.2025 DE 102025115982
(71) Anmelder: Arntz Beteiligungs GmbH & Co. KG, 37671 Höxter (DE)
(72) Erfinder: Reinhard, Florian, 37696 Marienmünster (DE); Polat, Ugur, 37603 Holzminden (DE); Schnabel, Werner, 37671 Höxter (DE)
(74) Vertreter: Kröncke, Rolf

(57) **Zusammenfassung**

Verbundriemen (12) aufweisend eine Deckplatte (30) und mindestens zwei mit dieser Deckplatte (30) in Kraft übertragenderweise verbundene Rippen (10) , wobei jede Rippe mit seiner Oberseite (6) mit der Unterseite (31) der Deckplatte (30) verbunden ist und die Rippen im Wesentlichen parallel zueinander und jeweils in Längsrichtung des Verbundriemens verlaufen, wobei die Deckplatte (30) ein Drehergewebe (34) aufweist.

## Beschreibung

Die vorliegende Erfindung betrifft in einem ersten Aspekt einen Verbundriemen mit einer Deckplatte und mindestens zwei mit dieser Deckplatte in Kraft übertragenderweise verbundene Rippen. Jede diese Rippen ist mit seiner Oberseite an der Unterseite der Platte verbunden und die Rippen liegen im Wesentlichen parallel zueinander und jeweils in Längsrichtung des Verbundriemens vor. Die Deckplatte weist dabei ein Drehergewebe auf. In einem weiteren Aspekt richtet sich die vorliegende Anmeldung auf entsprechende Riementriebe, umfassend einen erfindungsgemäßen Verbundriemen sowie entsprechende Geräte und Maschinen mit solchen Riementrieben bzw. Verbundriemen, insbesondere landwirtschaftliche Maschinen.

### Stand der Technik

Verbundriemen, auch als Kraftbänder oder Verbundkeilriemen bezeichnet, werden in verschiedensten Bereichen zur Kraftübertragung eingesetzt. Solche Verbundriemen stellen einen Verbund einer Mehrzahl von einzelnen Riemen, z. B. Keilriemen, dar. Dabei sind diese (Keil-)Riemen üblicherweise parallel nebeneinander angeordnet und durch eine Deckplatte miteinander kraftschlüssig verbunden. Diese Deckplatte wird auch als Decklage oder Rücken bezeichnet. Der Vorteil solcher Kraftbänder bzw. Verbundriemen ist, dass durch das Verbinden die Verdrehung und Schwingungen der Einzelriemen reduziert bzw. vermieden wird. Bei Vorliegen einer Mehrzahl von Einzelriemen im Riementrieb tritt häufig eine Verdrehung einzelner Riemen auf. Die Kopplung durch die verbindende Deckplatte reduziert die Verdrehung und Schwingungen, um eine verbesserte, gleichmäßige Kraftübertragung auf alle einzelnen Rippen im Vergleich zu Einzelriemen zu gewährleisten. Verbundriemen zeichnen sich daher durch eine geringere Anfälligkeit z. B. gegenüber Schwingungen und Stößen, einer höheren Bruchlast und Belastbarkeit sowie einer längeren Lebensdauer aus. Entsprechend sind Verbundriemen für Anwendungen geeignet, wo die Abstände zwischen den Riemenscheiben groß sind oder starke Kräfte übertragen werden müssen. Sie sind insbesondere auch geeignet, wo äußere Einwirkungen die Kraftübertragung beeinflussen, z. B. durch Verwendung in Bereichen, wo Schmutz etc. auftritt. Insbesondere bei landwirtschaftlichen Maschinen führen Schmutz, insbesondere Steine, Staub, Dreck etc. zu einer schnellen Schädigung der Kraftübertragungsriemen, wie der Verbundriemen. Gerade Steine oder andere solide Bestandteile, die zwischen Riemen und Riemenscheibe gelangen, führen zu einer Schädigung des Riemens und hier insbesondere der Deckplatte. Die Verschmutzungen werden durch die Rippen und die Riemenscheiben nach außen transportiert, sodass sie in die Deckplatte gedrückt und hier zu Schädigungen führen. Ein übliches Problem ist dabei ein Durchstoßen der Deckplatte, was letztendlich zur Rissbildung und somit Schädigung und Verkürzung der Lebensdauer entsprechender Verbundriemen führt. Solche Rissbildungen führen u.a. zu einem Herausreißen von Bereichen aus der Grundplatte und somit zu strukturellen Veränderungen der Verbundriemen. Dies trifft insbesondere für die derzeit üblicherweise verwendeten Heftcordgewebe bei Verbundriemen zu.

US 3,564,933 beschreibt die Nutzung von Textilgeweben in entsprechenden Deckplatten. Das Gewebe dient dazu, ein Verdrehen der einzelnen Keilriemen zu vermeiden.

DE 10 2016 001 268 A1 beschreibt ummantelte Keilriemen und Verbundriemen, wobei Deckplatten beschrieben werden, ohne sie weiter zu spezifizieren.

Aus der EP 3 466 245 A1 sind Verbundriemen und deren Verwendung als Riementriebe z. B. bei selbstfahrenden Mähdreschern bekannt.

Ein Problem stellt die oben beschriebene Schädigung, insbesondere Rissbildung, durch Verschmutzung dar, insbesondere bei einem Einsatz in landwirtschaftlichen Maschinen. Aufgabe der vorliegenden Erfindung ist die Bereitstellung von Verbundriemen, bei denen eine solche Rissbildung reduziert ist, insbesondere eine Schädigung der Verbundriemen derart, dass die Lebensdauer verringert und ein Reißen der Verbundriemen reduziert ist. Dabei soll neben der Verbesserung der Lebensdauer auch die Dynamik des Verbundkeilriemens bzw. Verbundriemens gleichbleiben.

Drehergewebe ist im Allgemeinen bekannt. So beschreibt die WO 2006/069562 A1 Drehergewebe und deren Herstellung im Allgemeinen. In der EP 0 716 035 A1 ist die Verwendung von Drehergeweben in Flachriemen beschrieben, um ein Verbinden der Endbereiche dieser nicht endlos hergestellten Riemen zu verbessern.

Die Aufgabe der Bereitstellung verbesserter Verbundriemen wird durch einen Verbundriemen mit Deckplatte und mindestens zwei Rippen gemäß Anspruch 1 erreicht. Entsprechende Riementriebe sind im Anspruch 11 definiert.

### Beschreibung der Erfindung

In einem ersten Aspekt richtet sich die vorliegende Erfindung auf einen Verbundriemen, aufweisend eine Deckplatte und mindestens zwei mit dieser Deckplatte in Kraft übertragenderweise verbundene Rippen, wobei jede Rippe mit seiner Oberseite mit der Unterseite der Deckplatte verbunden ist und die Rippen im Wesentlichen parallel zueinander und jeweils in Längsrichtung des Verbundriemens verlaufen, wobei die Deckplatte ein Drehergewebe aufweist.

Überraschend zeigte sich, dass die Verwendung von Drehergewebe in der Deckplatte die beschriebenen Probleme der Rissbildung durch Verschmutzungen in der Deckplatte bei Verbundriemen reduziert. Insbesondere eine Rissbildung in der Deckplatte mit ggf. Ausbrechen von Teilen aus der Deckplatte ist verringert. Es wird angenommen, dass durch die Eigenschaften des Drehergewebes Schmutzteile durch die Deckplatte von Innen nach Außen wandern können, ohne eine Rissbildung zu verursachen oder zu verstärken.

Die besondere Gewebeausbildung erlaubt die Rissbeständigkeit und somit die Lebensdauer von Verbundriemen zu erhöhen.

Als Ersatz oder Ergänzung von üblichem Verstärkungsgewebe in der Deckplatte wird erfindungsgemäß ein Drehergewebe eingesetzt. Dieses Gewebe zeichnet sich durch Grundkettfäden und Dreherkettfäden aus, die umeinander gewoben und diese durch Schussfäden umwunden werden. Allgemein spricht man von einem Drehergewebe wenn sogenannte Dreherfäden, also zusätzliche Bindungsfäden, verwendet werden, um die Kettund Schussfäden miteinander zu verflechten.

In einer Ausführungsform des erfindungsgemäßen Verbundriemens liegen mindestens zwei Rippen vor, wie mindestens drei Rippen. In einer Ausführungsform weist der Verbundriemen zwei, drei, vier, fünf oder sechs Rippen auf.

Diese Rippen können übliche Keilriemen sein, insbesondere solche mit einer symmetrischen Trapezform. Dem Fachmann sind geeignete Rippen bekannt. Diese können flankenoffen ausgebildet sein.

In einer Ausführungsform sind die Verbundriemen bzw. Kraftbänder solcher aus Einzelkeilriemen, die durch eine Deckplatte miteinander verbunden sind.

In einer Ausführungsform liegen die Rippen und/oder die Deckplatte mindestens teilweise, insbesondere vollständig ummantelt, vor. In einer Ausführungsform sind mindestens die Rippen vollständig ummantelt. Hierbei handelt es sich insbesondere um eine abriebfeste Ummantelung. Dem Fachmann sind geeignete Materialien zur Ummantelung bekannt. Z. B. ist die abriebfeste Ummantelung eine Textilummantelung. Als Ummantelungsmaterial werden textile Halbzeuge, wie Gewebe, Gewirke, Gestricke, Geflechte, Vliesstoffe und Filze verwendet, wobei Gewebe, Gewirke und Vliese bevorzugt eingesetzt werden. Die Textilummantelung wird bevorzugt in ein bis zwei Lagen aufgebracht. Für eine mehrlagige Ummantelung wird vorzugsweise ein gummiertes bzw. getränktes Hüllmaterial verwendet. Die Gummierung kann aus einer entsprechend geeigneten Elastomermischung bestehen. Übliche Elastomermischungen zur Gummierung bzw. Beschichtung sind CR, SBR, EPM- bzw. EPDM-Materialien.

Das Textilmaterial kann z. B. entsprechend als Schlauchgewebe oder Hüllschutzgewebe, vorzugsweise aus Baumwolle/Polyester oder Baumwolle/Polyamid eingesetzt werden. Entsprechende Ummantelungstechniken sind bekannt, in der Regel wird ein in Streifen vorliegendes Füllmaterial um den Riemenkörper vor Vulkanisation gewickelt. In einer Ausführungsform ist die abriebfeste Ummantelung der Keilriemen und/oder Deckplatte eine zweischichtig aufgebrachte, ein- oder beidseitig gummierte Gewebeauflage, wie sie als abriebfestes Riemenhüllgewebe, z. B. Schrägschussgewebe, erhältlich ist.

Das Drehergewebe ist bevorzugt eines, das aus üblichen Textilmaterialien, wie sie auch oben für das Gewebe zur Ummantelung beschrieben ist, hergestellt. In einer Ausführungsform umfasst das Drehergewebe Polyamid, oder Polyester, ggf. in Kombination mit Baumwolle. In einer Ausführungsform besteht das Drehergewebe aus Polyamid. Das Drehergewebe ist z. B. als offenporiges und/oder offenmaschiges Gewebe ausgebildet.

**In** einer Ausführungsform liegt das Drehergewebe dabei mit einer Dicke in einem Bereich von 0,1 bis 0,5 mm vor. In einer Ausführungsform ist das Drehergewebe eines mit einer Dicke zwischen 0,35 bis 0,45 mm.

Das Drehergewebe ist dabei in einer Ausführungsform in der Deckplatte im Wesentlichen mittig zwischen der Ober- und Unterseite dieser Deckplatte angeordnet. Dabei liegt das Drehergewebe üblicherweise vollflächig in der Deckplatte vor. **In** einer Ausführungsform liegt das Drehergewebe nicht randständig vor, sondern wird von der Elastomermischung der Deckplatte vollständig umhüllt.

Geeignete Drehergewebe sind dem Fachmann entsprechend bekannt, genauso wie die Anordnung sowie Verfahren zur Herstellung dieser Deckplatten solche Drehergewebe aufweisend.

**In** einer Ausführungsform weist die Deckplatte dabei unterschiedliche Elastomermischungen unter und oberhalb des vorliegenden Drehergewebes auf. Dabei ist die Elastomermischung, also das Polymer, zwischen dem Drehergewebe und der Unterseite der Deckplatte (Unterschicht) ein im Wesentlichen faserfreies Polymer. Fasern werden häufig zur Verstärkung in entsprechende Elastomere eingemischt, um die Mischung zu verfestigen und so eine gute Stabilität und geringe Verformung zu erreichen. Dieses ist in einer Ausführungsform für den Bereich zwischen Unterseite der Deckplatte und Drehergewebe in der Deckplatte nicht notwendig, das Polymer ist im Wesentlichen faserfrei. **In** einer anderen Ausführungsform ist die Elastomermischung ein im Wesentlichen faserhaltiges Polymer. Z.B. ist in einer Ausführungsform die Elastomermischung oberhalb und unterhalb des Drehergewebes gleich.

**In** einer weiteren Ausführungsform ist das Polymer aus der Elastomermischung vorliegend zwischen Oberseite der Deckplatte und Drehergewebe (Oberschicht) ein faserhaltiges Polymer. Hier ist eine Verbesserung der Körperfestigkeit wünschenswert, um eine geringere Verformung und höhere Stabilität zu erreichen. In einer Ausführungsform sind die Fasern dabei in Querrichtung ausgerichtet, um diesen Effekt zu erzielen.

Entsprechend faserhaltige und faserfreie Elastomermischungen zur Ausbildung des Polymers sind bekannt. Verstärkungsfasern sind ebenfalls aus dem Stand der Technik bekannt, z. B. sind geeignete Verstärkungsfasern Baumwollfasern, Polyesterfasern, Aramidfasern oder Fasern im Gemisch mit anderen Fasern. Weiter bevorzugte Verstärkungsfasern sind unter anderem Carbonfasern, Glasfasern, Cycloolefincopolymer-Fasern oder Polyimidfasern, die jeweils allein oder im Gemisch mit anderen Fasern eingesetzt werden können. Entsprechende Mischungen sind erhältlich, Verfahren zum Herstellen solcher Deckplatten, insbesondere auch zur Querorientierung der Fasern in dem Polymer sind bekannt.

Geeignete Elastomermischungen zur Ausbildung des Polymers sind insbesondere auf Basis von Chloropren (CR), EP(D)M oder SBR oder Mischungen hiervon. Dabei handelt es sich um übliche, im Bereich der Riemenherstellung verwendete Mischungen dieser Elastomere.

Diese Verbundriemen oder Kraftbänder zeichnen sich durch höchste, gleichmäßige Leistungsübertragungen aus. Sie weisen ein günstiges Laufverhalten in Bezug auf Schwingungen auf. Darüber hinaus sind sie insbesondere für große Achsabstände geeignet mit hoher Biegewilligkeit. Entsprechende Eignungen sind Keilflachantriebe, vertikale Antriebe sowie Kupplungsantriebe und Antriebe für Förderaufgaben. Kraftbänder können z. B. Schmalkeilriemen für entsprechende Verwendungen aufweisen. Anwendungsgebiete von solchen, insbesondere ummantelten Verbundriemen, sind im Maschinenbau und bei Landmaschinen, insbesondere auch im Nutzfahrzeugbau sowie für Sonderanwendungen im Maschinen- und Fahrzeugbau bei kleinen Scheibendurchmessern. Andere Einsatzgebiete sind solche mit stark beanspruchten Antrieben im Maschinen-, Schwermaschinenbau und in der Landmaschinenindustrie. Weiterhin können entsprechende Verbundriemen oder Kraftbänder für Transportaufgaben eingesetzt werden. Dabei können sie in bekannter Art und Weise mit einer zusätzlichen Deckplatte versehen werden, die entsprechend für die Einsatzbereiche z. B. profiliert ist zur Beförderung von Containern, Schwergut und für vielfältige Transport- und Beförderungseinrichtungen.

In einer Ausführungsform können die erfindungsgemäßen Verbundriemen als Endlosriemen hergestellt sein bzw. als Endlosriemen vorliegen.

Die vorliegende Erfindung bezieht sich ebenfalls auf entsprechende Riementriebe umfassend erfindungsgemäße Verbundriemen. Die Riementriebe weisen entsprechende zum Abtrieb dienende Riemenscheiben und solche zum Antrieb dienende Riemenscheiben auf, sowie erfindungsgemäße Verbundriemen. Solche Riementriebe werden insbesondere entsprechend im Maschinenbau und Sondermaschinenbau sowie dem Nutzfahrzeug- und Fahrzeugbau, insbesondere im landwirtschaftlichen Bereich, wie Mähdreschern etc. eingesetzt.

**In** einer Ausführungsform weist ein erfindungsgemäßer Riementrieb mindestens eine Antriebscheibe und mindestens eine Abtriebscheibe auf. In einer Ausführungsform sind die Riementriebe Mehrscheibenriementriebe mit mindestens jeweils zwei Scheiben, Weiterhin können Spannrollen im Riementrieb vorliegen.

Schließlich richtet sich die vorliegende Erfindung auf entsprechende Einrichtungen bzw. Maschinen, insbesondere landwirtschaftliche Einrichtungen, wie Mähdrescher, Feldhäcksler, oder Baumaschinen aber auch andere Maschinen. Z.B. aus dem Nutzfahrzeugbereich, die einer starken Verschmutzung ausgesetzt sind, mit entsprechenden solche Riementriebe und erfindungsgemäße Verbundriemen aufweisend.

Die vorliegende Erfindung wird nachfolgend anhand der Figuren weiter ausgeführt, ohne darauf beschränkt zu sein.

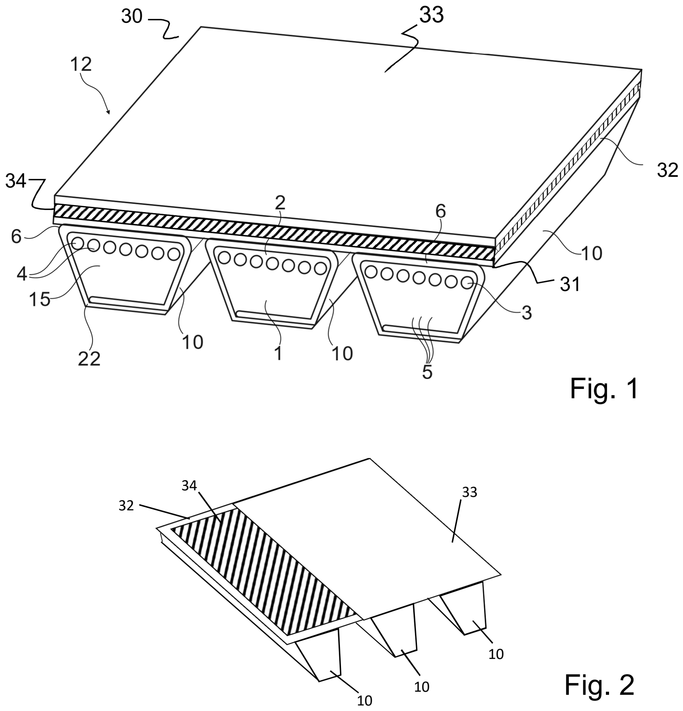

Die Figur 1 zeigt einen Verbundriemen 12, auch als "Joint-V-Belt" oder Kraftband bezeichnet. Der Verbundriemen 12 besteht aus wenigstens zwei ummantelten Keilriemen 10 (vorliegend 3 Keilriemen), die an ihrer Oberseite 6 über eine Deckplatte 30 miteinander verbunden sind. Die Deckplatte 30 weist dabei mehrere Schichten auf, nämlich eine Unterschicht 32, eine Oberschicht 33 sowie das Drehergewebe 34. Die Unterseite 31 der Deckplatte 30 ist entsprechend mit der jeweiligen Oberseite 6 der ummantelten Keilriemen 10 verbunden. Die verbundenen Einzelkeilriemen 10 bilden an dem Kraftband Rippen, vorliegend sind drei Rippen dargestellt. Die Rippen entsprechen jeweils einzelnen Keilriemen 10. Diese sind dabei als trapezförmige bzw. keilförmige Riemenkörper 15 aufgebaut mit einer entsprechenden Ummantelung 22, einem Unterkern 1, einem Oberkern 2 sowie der Zuglage 3 mit den Zugsträngen 4. Die Keilriemen weisen im vorliegenden Beispiel Verstärkungsfasern 5 auf. Entsprechende Verstärkungsfasern 5 können auch erfindungsgemäß in der Oberschicht der Deckenplatte 33 vorliegen. In einer Ausführungsform ist die Unterschicht 32 der Deckplatte faserfrei. Mit der Deckplatte 30, hier der Unterschicht 31, sind die entsprechenden ummantelten Einzelkeilriemen 10 bzw. die ummantelten Riemenkörper 15 miteinander verbunden. Die Verbindung erfolgt über bekannte Verfahren.

Die Figur 2 zeigt die Anordnung des Drehergewebes 34 in der Deckplatte 30. In dieser perspektivischen Darstellung sind die Einzelkeilriemen 10, die an der Unterseite der Deckplatte angeordnet sind, schematisch dargestellt. Das Drehergewebe 34 ist dabei so in der Deckplatte angeordnet, dass es im Wesentlichen die gesamte Fläche der Deckplatte 30 einnimmt, insbesondere aber die Bereiche, die nicht an der Unterseite der Deckplatte von einem Keilriemen abgedeckt sind. Das Drehergewebe 34 erstreckt sich im Wesentlichen bis zu den lateralen Rändern der Deckplatte, wobei in einer Ausführungsform, wie in der Figur dargestellt, die Elastomermischung das Drehergewebe seitlich vollständig umschließt.

Die Prüfergebnisse zum Durchstoßwiderstandstest an einer Kraft-Dehnungs-Prüfmaschine sind dabei wie folgt:
Gummi-Deckplatte: Fmax = 217N, 214 N, 209 N; xquer = 213 N
Heftcord-Deckplatte: Fmax = 421 N, 393 N, 452 N; xquer = 422 N
Drehergewebe-Deckplatte: Fmax = 286 N, 292 N, 299 N; xquer = 292 N

Der erfindungsgemäße Riemen mit Drehergewebe-Deckplatte weist ein Drehergewebe in einer Dicke von ca. 0,42 mm auf. Der weitere Aufbau und die weiteren Materialien des erfindungsgemäßen Verbundriemens sind übliche Materialien und ein üblicher Aufbau. Bei den zum Vergleich benutzten Riemen mit Gummi-Deckplatte und Heftcord-Deckplatte handelt es sich umkommerzielle Produkte. Im Vergleich zum Verbundriemen mit Heftcord wurde dieser Heftcord mit dem erfindungsgemäßen Drehergewebe ersetzt.

### Bezugszeichenliste:

- 1: Unterkern
- 2: Oberkern
- 3: Zuglage
- 4: Zugstrang
- 5: Verstärkungsfaser(n)
- 6: Oberseite Keilrippe
- 10: ummantelter Keilriemen
- 12: Verbundriemen
- 15: Riemenkörper
- 22: Ummantelung
- 30: Deckplatte
- 31: Unterseite Deckplatte
- 32: Unterschicht Deckplatte
- 33: Oberschicht Deckplatte
- 34: Drehergewebe

## Patentansprüche

1. Verbundriemen aufweisend eine Deckplatte und mindestens zwei mit dieser Deckplatte in Kraft übertragenderweise verbundene Rippen, wobei jede Rippe mit seiner Oberseite mit der Unterseite der Deckplatte verbunden ist und die Rippen im Wesentlichen parallel zueinander und jeweils in Längsrichtung des Verbundriemens verlaufen, **dadurch gekennzeichnet, dass** die Deckplatte ein Drehergewebe aufweist.

2. Verbundriemen nach Anspruch 1, wobei die Rippen und/oder wobei die Deckplatte mindestens teilweise insbesondere vollständig ummantelt sind, insbesondere eine abriebfeste Ummantelung aufweisen.

3. Verbundriemen nach einem der Ansprüche 1 oder 2, wobei die Rippen Keilriemen sind, insbesondere mit einer symmetrischen Trapezform.

4. Verbundriemen nach einem der vorherigen Ansprüche, wobei das Drehergewebe Polyamid umfasst, ggf. weiterhin Polyester oder Baumwolle aufweisend, bevorzugt aus Polyamid besteht.

5. Verbundriemen nach einem der vorherigen Ansprüche, wobei das Drehergewebe offenporig und/oder offenmaschig ausgebildet ist.

6. Verbundriemen nach einem der vorherigen Ansprüche, wobei das Drehergewebe eine Dicke von 0,1 bis 0,5 mm, wie 0,35 bis 0,45 mm, aufweist.

7. Verbundriemen nach einem der vorherigen Ansprüche, wobei das Drehergewebe im Wesentlichen mittig zwischen der Ober- und Unterseite in der Deckplatte angeordnet ist.

8. Verbundriemen nach einem der vorherigen Ansprüche, wobei zwischen Drehergewebe und Unterseite der Deckplatte ein im Wesentlichen faserfreies Polymer vorliegt.

9. Verbundriemen nach einem der vorherigen Ansprüche, wobei zwischen Drehergewebe und Unterseite der Deckplatte ein im Wesentlichen faserhaltiges Polymer vorliegt.

10. Verbundriemen nach einem der vorherigen Ansprüche, wobei zwischen Oberseite und Drehergewebe der Deckplatte ein im Wesentlichen faserhaltiges Polymer, insbesondere eines mit quer ausgerichteten Fasern vorliegt.

11. Verbundriemen nach einem der vorherigen Ansprüche, wobei das Polymer ausgewählt ist aus CR, EPDM oder SBR oder Mischungen hiervon.

12. Riementrieb umfassend einen Verbundriemen nach einem der Ansprüche 1 bis 11.

13. Riementrieb nach Anspruch 12, oder Verbundriemen nach einem der Ansprüche 1 bis 11 zur Verwendung in Landmaschinen, Baumaschinen, Forstmaschinen und anderen Antrieben, die einer starken Verschmutzung ausgesetzt sind.

14. Landwirtschaftsmaschinen, Forstwirtschaftsmaschinen oder Baumaschinen aufweisend einen Riementrieb nach einem der Ansprüche 12 oder 13 oder einen Verbundriemen nach einem der Ansprüche 1 bis 11.
